# EUROPÄISCHE PATENTSCHRIFT

(11) **EP 3 757 282 B1**
(45) Veröffentlichungstag und Bekanntmachung des Hinweises auf die Patenterteilung: **10.01.2024**
(21) Anmeldenummer: 19183225.2
(22) Anmeldetag: 28.06.2019
(51) Int. Cl.: D06F 93/00, B65G 1/137

(54) **SYSTEM ZUR IDENTIFIZIERUNG UND KONTROLLE VON OBJEKTEN MITTELS DARAN ANGEBRACHTEN TRANSPONDERN**
SYSTEM FOR THE IDENTIFICATION AND CONTROL OF OBJECTS BY MEANS OF ATTACHED TRANSPONDERS
SYSTÈME D'IDENTIFICATION ET DE CONTRÔLE DES OBJETS AU MOYEN DES TRANSPONDEURS MONTÉS SUR LESDITS OBJETS

(43) Veröffentlichungstag der Anmeldung: 30.12.2020
(73) Patentinhaber: Texonik GmbH, 84061 Ergoldsbach (DE)
(72) Erfinder: Stocker, Konrad, 84061 Ergoldsbach (DE)
(74) Vertreter: Grättinger Möhring von Poschinger Patentanwälte Partnerschaft mbB

(56) Entgegenhaltungen:
- EP-A1- 3 091 122
- WO-A1-2018/185594
- AT-A1- 517 567
- CN-A- 109 402 999

## Beschreibung

Die Erfindung betrifft ein System zur Identifizierung und Kontrolle von Objekten, insbesondere von Wäschestücken in einer Mietwäscherei, gemäß Patentanspruch 1.

Bei einem aus DE 102006047356 B3 bekannten System zur Kommunikation mit an Objekten anbringbaren Transpondern werden beispielsweise in Versandkartons verpackte Objekte derart sicher identifiziert, dass Fehlmengen in der Transportkette schnell und effizient erkannt werden können. Dieses bekannte System beruht auf einem physikalischen Verfahren zur Erhöhung der Lesewahrscheinlichkeit der RFID-Transponder, wobei weitere objektbezogene Konformitätskriterien bei der Überprüfung eines Objektstapels unberücksichtigt bleiben.

Aus DE 102010035531 A1 ist ferner eine Anlage zum Überprüfen von in einem Container enthaltenen Objekten bekannt, bei welcher die Objekte durch Kippen des Containers vereinzelt, auf ein Prüfplateau der Anlage gefördert und dabei durch Auslesen von an den Objekten befestigten RFID-Tags identifiziert werden. Durch einen elektronischen Ist-Soll-Abgleich kann somit der Containerinhalt überprüft und gegebenenfalls neu zusammengestellt werden.

Diese bekannte Prüfanlage setzt voraus, dass es sich um die Überprüfung schüttbarer Objekte handelt, so dass deren Einsatz zur Kontrolle von gefalteten Wäschestücken von vorneherein ausscheidet.

Schließlich ist aus WO 2007/106045 A1 ein System zur Überwachung des Wäschekreislaufs von Wäscheartikeln aus Kliniken und Hotels bekannt, bei welchem Wäschestücke in einer geschlossenen Schleife von deren Abgabe bis zur Entnahme verfolgt werden können, mit dem Ziel, den Bestand der Wäschestücke bzw. deren Schwund zu kontrollieren. Zu diesem Zweck werden die Wäschestücke mit RFID-Tags versehen, welche neben deren Identifikations-Code noch weitere Artikeldetails enthalten, wie Art und Größe, Kaufdatum, Kaufpreis bis hin zu Sicherheitsmerkmalen wie Benutzerzugriffsrechten oder Datensichteinschränkungen.

Bei diesem bekannten Überwachungssystem wird die Schmutzwäsche beispielsweise einer Klinik in Säcken gebündelt, in ein Transportfahrzeug verladen, in der Wäscherei abgegeben, dort dem Wäscheprozess unterworfen, nach dem Waschen gestapelt, an die Klinik geliefert, dort gestapelt, vom Klinikpersonal entnommen, einem Krankenbett zugeführt und dort vom Patienten benutzt, wobei nach jeder der aufgezählten Stationen eine Zählung bzw. Identifizierung anhand des RFID-Tags durchgeführt wird. Jede Veränderung der Stückzahl lässt sich zwar theoretisch in einem derartigen geschlossenen Kreislauf nachvollziehen.

Wegen der großen Zahl von Kontrollpositionen ist mit einer eher geringen mathematischen Lesewahrscheinlichkeit zu rechnen, d.h. ein lückenloses Tracking der beförderten Objekte ist nur bedingt erzielbar.

Eine umfassende Steuerung des Prozessablaufs innerhalb des Wäschereibetriebs, wie beispielsweise mit Einbeziehung von Mietwäsche, ist nach dem bekannten System nicht vorgesehen.

Zudem erfordert dieses System hohe Invesitionskosten für die an zahlreichen Kontrollpositionen vorgesehenen RFID-Antennen und Lesegeräte.

In AT 517567 A1 ist eine Anlage zum Behandeln gewaschener, gefalteter und sortenweise zu Verpackungseinheiten gestapelter Wäschestücke, die je mit einem Chip zur Speicherung von für die Bestimmung der Wäschestücksorten vorgesehenen Daten versehen sind, beschrieben, die einen an Mangel- und Falteinrichtungen anschließenden Aufnahmeförderer für die Verpackungseinheiten aufweist. Sie umfasst ferner in Abhängigkeit von vorgegebenen Lieferaufträgen ansteuerbare Weichen zu mehreren Ausgabeförderern und einen umlaufenden Speicherförderer, der über eine Weiche mit einem in Förderrichtung vor den Ausgabeförderern an den Aufnahmeförderer angeschlossenen Übergabeförderer in Verbindung steht, wobei dem Aufnahmeförderer in Förderrichtung vor den Ausgabeförderern sowie dem Speicherförderer in Förderrichtung vor dem Übergabeförderer eine mit einer Steuereinrichtung für die Weichen verbundene Leseeinrichtung für die Chips der Wäschestücke zugeordnet ist.

Die bekannte Anlage ist vorteilhaft bei Fördereinrichtungen zum automatischen Steuern einfacher Prozessabläufe. Spezielle Anforderungen, z. B. bei Mietwäschereien, bleiben dabei unberücksichtigt. Demgegenüber liegt der vorliegenden Erfindung die Aufgabe zugrunde, die Überprüfung und fehlerfreie Erkennung von zu Stapeln gebündelten Wäschestücken mit hoher Lesewahrscheinlichkeit sicherzustellen, wobei Stapel aus gefalteter Wäsche in einer nach Kunden, Wäscheart und Wäschezustand zuverlässig gebündelten Form und in korrekter Stückzahl gebildet und ausgeliefert werden.

Das erfindungsgemäße System bezieht sich hinsichtlich seiner Anwendung auf Wäschestücke, die in einer kommerziellen Mietwäscherei bearbeitet werden, und auf Wäscheteile, wie sie üblicherweise von einem Kundenkreis aus Hotels, Restaurants oder Kliniken schmutzig zurückgegeben werden und in der Wäscherei durch Waschen, Trocknen, Mangeln, Falten oder dergleichen bearbeitet werden, bevor sie an die Kunden ausgeliefert werden. Hierauf spezialisierte Großwäschereien liefern an ihre Kunden nicht nur derart behandelte Wäschestücke, sondern auch neu beschaffte Mietwäsche, wie sie nach Art und Qualität vom Kunden gewünscht wird. Im Falle von Wäscheverlusten und je nach Wäscheanforderungen erhält der Kunde stets zeitgerecht die gewünschte bzw. bestellte Menge an Wäschestücken und kann auf diese Weise seinen Wäschevorrat bestimmen. Bei der Wäscherei befindet sich somit ein Warenlager mit Wäschestücken für die jeweiligen Kunden, welches aus ergänzter Mietwäsche und durch Aufbereiten von Schmutzwäsche behandelten Wäschestücken zusammengesetzt ist. Dementsprechend werden die Kundenaufträge aus diesem Warenlager kommissioniert. Das Bestandsmanagement obliegt dabei der Mietwäscherei.

Zur Lösung der Aufgabe wird auf Patentanspruch 1 Bezug genommen.

Ausgehend von dem der vorliegenden Erfindung zugrundeliegenden allgemeinen Lösungsprinzip, werden einzelne Objekte, vorliegend Wäschestücke, nach Konformitätskriterien zu Stapeln gebündelt wobei in einer nachfolgenden Kontrolleinheit fehlerhaft gebündelte Objekte als Fehlstapel erkannt und mit Korrekturanweisung einer Sortierstation zugeführt, dort von den als fehlerfrei erkannten Fertigstapeln abgesondert und nach Durchlaufen einer Korrekturstation erneut der Aufgabestation zur Kommissionierung als Fertigstapel zugeführt werden.

Die von obigem System erfassten Konformitätskriterien sind durch das jeweilige Wäschestück vorgegeben. Sie können vielfältig sein; beispielsweise umfassen sie je nach Stückzahl der gestapelten Wäschestücke das Gewicht oder die Abmessung eines Stapels, die korrekte Lage der Wäschestücke im Stapel oder die Art einer Bündelungsvorrichtung der Wäschestücke etwa als Umreifung oder als Folienverpackung.

Das System gemäß Patentanspruch 1 umfasst verschiedene Baugruppen, denen die zu kontrollierenden Stapel zugeführt werden und die miteinander zur Aufgabenlösung zusammenwirken, wie eine Kontrolleinheit, eine Sortierstation und eine Korrekturstation.

Die Kontrolleinheit dient der Erkennung fehlerhaft gebündelter Wäschestücke als Fehlstapel; die Sortierstation dient der Absonderung der Fehlstapel von den als fehlerfrei erkannten Fertigstapeln und schließlich die Korrekturstation dient der Umformung eines Fehlstapels in einen konformen Fertigstapel, beispielsweise durch Ergänzung von fehlenden Wäschestücken, durch Aussortieren und Ersetzen von Wäschestücken eines unrichtigen Artikeltyps durch solche eines konformen Artikeltyps oder durch Korrigieren einer nicht stapelgerechten Lage eines Wäschestücks innerhalb des Stapels. Dabei kann einer durch die Kontrolleinheit erstellten Korrekturanweisung gefolgt werden.

Dementsprechend umfasst die Erfindung aus einem Warenlager mit neuen oder durch Aufbereiten von Schmutzwäsche behandelten, jeweils mit Vergabe einer Identifikationsnummer RFID-getaggte Wäschestücke die mittels einer elektronischen Steuereinheit mit zentraler Datenbank nach daraus lesbaren Konformitätskriterien und mittels weiterer Baugruppen für die fertige Kommissionierung zu Stapeln gebündelt werden.

Zu diesen Baugruppen zählen erfindungsgemäß
- eine Fördereinrichtung mit einer Aufgabestelle für nach Konformitätskriterien gestapelten Wäschestücken;
- eine Leseeinheit zum Auslesen der RFID-Tags aller Wäschestücke eines Stapels und weiterer zur jeweiligen Identifikationsnummer eines RFID-Tags in der Datenbank hinterlegter Daten und zum Zählen der Anzahl der Wäschestücke eines Stapels;
- eine Bündelungsvorrichtung zum Bündeln fehlerfreier für die Kommissionierung geeigneter Fertigstapel;
- eine Etikettiereinheit zur visuell lesbaren Anzeige sowohl korrekter als auch fehlerhafter Stapel, vorteilhaft bei letzteren mit Angabe des Fehlergrunds als Korrekturanweisung;
- eine Sortierstation mit einer Mehrzahl von Sortierpositionen, eine davon für abzusondernde Fehlstapel;
- eine Korrekturstation mit Sortiertisch zur Korrektur von Fehlstapeln, wobei vorzugsweise eine Ausführungsform zur manuellen Korrektur vorgesehen ist, die einen Sortiertisch aufweisen kann.

Die RFID-Tags ermöglichen der Leseeinheit das Auslesen der Identifikationsnummern für die einzelnen Wäscheteile. Anhand dieser Nummern ermittelt die Steuerungseinheit die in der Datenbank gespeicherten Daten zu jeder Identifikationsnummer wie die Artikeltypen der Wäscheteile oder die Anzahl der zu einem Stapel gebündelten Wäscheteile; bevorzugt auch das sich daraus ergebende Teilgewicht und die Stapelabmessungen einschließlich der Stapelhöhe. In der Regel sind alle ausgelesenen Wäschestücke vom gleichen Artikeltyp, so dass die Zahl der ausgelesenen RFID-Tags der gesamten Stapelhöhe eines Artikeltyps entspricht.

Besonders vorteilhaft ist die Möglichkeit des Bündelns der Wäschestücke mittels der Bündelungsvorrichtung. Bei als korrekt geprüften Fertigstapeln bietet sich deren Bündelung an, damit in nachfolgenden Behandlungs- und Logistikprozessen Wäscheteile, die versehentlich aus einem Fertigstapel entfallen oder entfernt werden, erneut als fehlerhaft festgestellt werden können, weil deren Inhalt von den Daten des gebündelten Fertigstapels abweicht.

Außerdem ermöglicht die Bündelung in Verbindung mit der Etikettierung in der Etikettiereinheit die Erzeugung von Stapeln, die eine eindeutige Zuordnung nicht nur zu einzelnen Kunden, sondern auch zu dessen räumlich getrennten Abteilungen, unterschiedlichen Stockwerken oder sogar einzelnen Zimmern oder Betten ermöglichen und somit einen Zusatznutzen für die Kunden erzeugen.

Grundsätzlich kann es vorkommen, dass ein im Stapel vorhandenes RFID-Tag nicht gelesen wird. Um auch dies auszuschließen ist erfindungsgemäß eine Leseeinheit mit nachgeordneter Wiegestation zur Überprüfung der gelesenen Stückzahl eines Stapels im Rahmen der Konformitätskriterien vorgesehen. Mittels dieser Wiegestation kann geprüft werden, ob das Ist-Stapelgewicht in einem Toleranzbereich bezüglich des Soll-Stapelgewichts liegt.

Alternativ oder zusätzlich kann noch eine Leseeinheit mit nachgeordneter Messvorrichtung für die Überprüfung der Stapelgröße im Rahmen der Konformitätskriterien, z.B. je nach Faltdicke der gestapelten Wäschestücke, vorgesehen sein.

Durch vorstehende ergänzende Überprüfung von Stapelgewicht und Stapelgröße können auch Teile ohne Transponder (beschädigte, abgetrennte, verlorene oder fehlende Transponder) erkannt werden.

Schließlich kann neben der genannten metrischen Überprüfung der Stapelabmessungen alternativ oder zusätzlich noch eine Leseeinheit mit nachgeordneter Kameraeinheit zur Überprüfung der korrekten Lage gefalteter Wäschestücke eines Stapels vorgesehen sein.

Zur Förderung des weiteren Prozessablaufs kann das erfindungsgemäße System noch mit einer Bündelungsvorrichtung in Form einer Umreifungsmaschine zur Bündelung fehlerfreier und/oder fehlerhafter Stapel ausgestattet sein. Die Bündelungsvorrichtung kann auch in Form einer Folienverpackungsmaschine ausgebildet sein. Als fehlerhaft erkannte Stapel, die nachfolgend korrigiert werden können, für die spätere Kommissionierung erneut gebündelt werden, indem sie der Bündelungsvorrichtung nochmals zugeführt werden.

Die Etikettiereinheit ist bevorzugt derart ausgebildet, dass sie ergänzende Stapelinformationen erzeugt, welche zu Fehlstapeln den Fehlergrund angeben, beispielsweise "falsche Stapelhöhe", "hohes Stapelgewicht".

Vorteilhaft umfasst die Etikettiereinheit einen Etikettendrucker, der die ergänzenden Stapelinformationen als Barcode druckt, der nach erfolgter Bündelung eines fehlerhaften Stapels auf einer Folienverpackung oder sonstigen Umreifung des fehlerhaften Stapels angebracht wird. Anstelle von Barcodes können die Etiketten auch mit RFID-Transpondern ausgestattet sein, so dass die StapelInformationen und eventuelle Fehler drahtlos ausgelesen werden können. Damit besteht die Möglichkeit, in Wäschecontainern aufgenommene Stapel gesamthaft für den gesamten Containerinhalt prüfen bzw. auslesen zu können.

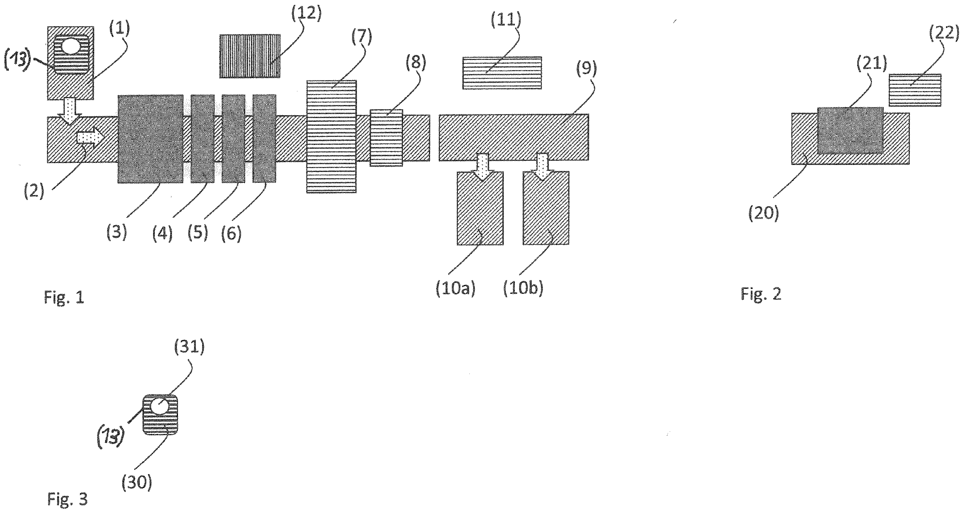

Im Folgenden wird ein Ausführungsbeispiel der vorliegenden Erfindung anhand einer Zeichnung mit den Figuren 1-3 erläutert.

Die Figuren zeigen in schematischer Darstellung eine Stapel-Kontroll-Anlage, mittels welcher nach dem erfindungsgemäßen System Wäschestücke geprüft, bewertet und sortiert werden. Die Stapelzählung hat sich anstelle von einer Zählung einzelner Wäschestücke bewährt, da die Zählvorgänge wesentlich geringer sind und da bei Anwendung des erfindungsgemäßen Systems die Anzahl der fehlerhaften Stapel wesentlich geringer ist.

Die Anlage umfasst eine Aufgabestation 1 zu einer Fördereinrichtung 2 für die aus generell gleichartigen Wäschestücken gebildeten Stapel 13. Jeder auf die Fördereinrichtung 2 aufgelegte Stapel 13, der z.B. auch direkt von einer vorgeschalteten Verarbeitungsmaschine erzeugt werden kann, wird zunächst an eine Leseeinheit 3 transportiert. An dieser Leseeinheit werden die Wäschestücke 30 eines Stapels 13, welche jeweils mit einem RFID-Tag 31 versehen sind, gelesen. Erfasst werden können dabei auch relevante von einer vorgeschalteten Verarbeitungsmaschine gelieferte Daten.

Es kommen bevorzugt passive RFID-Tags zur Verwendung, welche eine längere Lebensdauer aufweisen und weniger Wartungsaufwand erfordern als solche, mit ganz oder teilweise eigener Energieversorgung.

Alle RFID-Tags 31 eines Stapels 13 werden ausgelesen und an die Datenbank der Steuereinheit 12 übergeben. Die Steuereinheit 12 ermittelt anhand der RFID-Auslesung die Artikeltypen der einzelnen Wäschestücke und bestimmt daraus die Anzahl der im Stapel 13 gebündelten Wäschestücke sowie weitere Konformitätskriterien zum jeweiligen Stapel wie Höhe, Gesamtgewicht und Abmessungen des Stapels.

Die folgende Konformitätsprüfung kann neben den in der Leseeinheit 3 in einem ersten Prüfschritt ermittelten Daten, wonach es sich um einen nach Anzahl und Art konform zusammengesetzten Stapel handelt noch weitere Prüfschritte umfassen. Mit weiteren Prüfschritten kann sichergestellt werden, dass nur korrekte Stapel 13 vorhanden sind. Diese weiteren Prüfschritte umfassen eine Wiegestation 4 für einen Vergleich der ausgelesenen Daten mit dem ermittelten Gesamtgewicht des Stapels; ferner um eine Messvorrichtung 5, mit welcher die Abmessungen des Stapels ermittelt und mit den in der Lesevorrichtung 3 festgestellten Daten verglichen werden; gegebenenfalls noch eine Kameraeinheit 6, mittels welcher Formabweichungen eines Stapels und damit die nichtkonforme Anordnung bzw. Lage einzelner Wäschestücke 30 im Stapel feststellbar sind.

Durch eine derartige Konformitätsprüfung, umfassend eine Leseeinheit und optional weitere Einheiten (4, 5, 6) kann die Konformität der einzelnen Stapel 13 sichergestellt werden. Dies gilt auch für solche Fälle, bei denen Wäschestücke 30 ohne RFID-Tag 31 oder solche deren RFID-Tag nicht automatisch gelesen wurde, in einem Stapel enthalten sind.

Um korrekte Stapel nach dem erfindungsgemäßen System im weiteren Prozessablauf bis zur Kommissionierung sicher verarbeiten zu können ist ferner eine Bündelungsvorrichtung 7 zum Bündeln fehlerfreier, für die Kommissionierung geeigneter Fertigstapel vorgesehen; in einer nachfolgenden Etikettiereinheit 8 erfolgt die visuell lesbare Anzeige sowohl konformer als auch fehlerhafter Stapel. Dazu zählen z.B. Daten betreffend Artikeltyp, Stückzahl der Wäschestücke des Stapels, Datum der Etikettierung etc.

Die Etikettiereinheit 8 umfasst auch ergänzende Stempelinformationen, wie zu Fehlstapeln die Angabe des Fehlergrunds. Diese kann vorteilhaft als Barcode zur jeweiligen Identifikationsnummer gemäß dem zugehörigen RFID-Tag lesbar sein.

Am Ende der Fördervorrichtung 2 befindet sich eine Sortierstation 9 mit einer Mehrzahl von Sortierpositionen 10a, 10b, von denen eine für abzusondernde Fehlstapel vorgesehen ist. Eine der Sortierstation 9 zugeordnete Anzeigevorrichtung 11 dient der Orientierung des an der Sortierstation 9 manuell eingreifenden Personals. Die Anzeigevorrichtung 11 differenziert zwischen Fertigstapeln und Fehlstapeln und zeigt für eine in Figur 2 dargestellte nachgeschaltete Korrekturstation 20 den Fehlergrund als Voraussetzung für die manuelle Korrektur eines Fehlstapels mittels einer RFID-Leseeinheit 21 und einer zugeordneten Anzeigevorrichtung 22 an.

In Figur 3 ist ein Stapel 13, bestehend aus einzelnen Wäschestücken 30 dargestellt, wobei jedes Wäschestück mit einer Identifikationslabel in Form eines RFID-Tags 31 versehen ist. Die RFID-Tags werden bevorzugt bereits beim Hersteller des Wäschestücks an geeigneter Stelle, zum Beispiel längs eines Innensaums oder mittels einer den RFID-Chip enthaltenen Hülle an- bzw. eingenäht.

## Patentansprüche

1. System zur Identifizierung und Kontrolle von Wäschestücken für eine Mietwäscherei, mittels an den Wäschestücken angebrachten Transpondern in einem mehrstufigen Arbeitsverfahren, ausgehend von einer Aufgabestelle (1) einer Fördereinrichtung (2) bis zu deren Abgabestation für die Kommissionierung von nach Konformitätskriterien zu Stapeln gebündelten Wäschestücken, wobei in einer nachfolgenden zum System gehörenden Kontrolleinheit fehlerhaft gebündelte Wäschestücke als Fehlstapel erkannt und einer Sortierstation (9) zugeführt, dort von als fehlerfrei erkannten Fertigstapeln abgesondert und nach Durchlaufen einer Korrekturstation erneut der Aufgabestelle (1) zur Kommissionierung als Fertigstapel zugeführt werden, und wobei aus einem zum System gehörenden Warenlager neue oder durch Aufbereiten von Schmutzwäsche behandelte, jeweils mit Vergabe einer Identifikationsnummer RFID getaggte Wäschestücke mittels einer zum System gehörenden elektronischen Steuereinheit (12) mit zentraler Datenbank nach daraus lesbaren Konformitätskriterien und mittels folgender zum System gehörenden Baugruppen zu Stapeln für die fertige Kommissionierung gebündelt werden:
die besagte Fördereinrichtung (2) mit der besagten Aufgabestelle (1) für nach Konformitätskriterien gestapelten Wäschestücken;
eine Leseeinheit (3) zum Auslesen der RFID-Tags (31) aller Wäschestücke (30) eines Stapels (13) und weiterer zur jeweiligen Identifikationsnummer eines RFID-Tags in der Datenbank hinterlegter Daten und zum Zählen der Anzahl der Wäschestücke eines Stapels;
eine Bündelungsvorrichtung (7) zum Bündeln fehlerfreier, für die Kommissionierung geeigneter Fertigstapel;
eine Etikettiereinheit (8) zur visuell lesbaren Anzeige durch entsprechende Etikettierung sowohl konformer als auch fehlerhafter Stapel;
die besagte Sortierstation (9) mit einer Mehrzahl von Sortierpositionen (10a, 10b), eine davon für abzusondernde Fehlstapel;
die besagte eine Korrekturstation mit Sortiertisch (20) zur Korrektur von Fehlstapeln.

2. System nach Anspruch 1, mit einer der Leseeinheit (3) nachgeordneten Wiegestation (4) zur Überprüfung der gelesenen Stückzahl eines Stapels im Rahmen der Konformitätskriterien.

3. System nach Anspruch 1, mit einer der Leseeinheit (3) nachgeordneten Messvorrichtung (5) für die Überprüfung der Stapelgröße im Rahmen der Konformitätskriterien.

4. System nach Anspruch 1, mit einer der Leseeinheit (3) nachgeordneten Kameraeinheit (6) zur Überprüfung der korrekten Lage gefalteter Wäschestücke eines Stapels.

5. System nach Anspruch 1, mit einer Bündelungsvorrichtung (7) in Form einer Umreifungsmaschine zur Bündelung fehlerfreier und/oder fehlerhafter Stapel.

6. System nach Anspruch 1 mit einer Bündelungsvorrichtung (7) in Form einer Folienverpackungsmaschine zur Bündelung fehlerfreier und/oder fehlerhafter Stapel.

7. System nach Anspruch 1,
**dadurch gekennzeichnet,**
**dass** die Etikettiereinheit (8) ergänzende Stapelinformationen erzeugt, welche zu Fehlstapeln den Fehlergrund angeben.

8. System nach Anspruch 7,
**dadurch gekennzeichnet,**
**dass** der Fehlergrund als Barcode zur jeweiligen Identifikationsnummer lesbar ist.

## Claims

1. System for the identification and inspection of pieces of laundry for a rental laundry shop by means of transponders attached to the laundry in a multi-stage working method, starting from a loading point (1) of a conveying device (2) to its delivery station for picking laundry bundled into piles according to conformity criteria, wherein, in a subsequent control unit belonging to the system, incorrectly bundled pieces of laundry are identified as faulty piles and are fed to a sorting station (9), thereby being separated from finished piles that have been identified as being fault-free, and, after passing through a correction station, they are fed back to the feeding station (1) for being picked as finished piles, and wherein, coming from a depot belonging to the system, new pieces of laundry or pieces of laundry that have been treated during the course of processing dirty laundry, each respectively tagged with an RFID identification number, are bundled into piles to be picked as finished pieces of laundry by means of an electronic control unit (12) belonging to the system with a central database according to readable conformity criteria and by means of one of the following assemblies belonging to the system:
the aforementioned conveying device (2) with the aforementioned loading point (1) for laundry piled according to conformity criteria;
a reading unit (3) for reading the RFID tags (31) of all pieces of laundry (30) in a single pile (13) and other data stored in the database for the respective identification number of an RFID tag and for counting the number of pieces of laundry in a single pile;
a bundling device (7) for bundling fault-free finished piles suitable for being picked as finished pieces of laundry;
a labelling unit (8) for a visually readable indication via appropriate labelling of both compliant as well as faulty piles;
the aforementioned sorting station (9) with a plurality of sorting positions (10a, 10b), one of which is for faulty piles to be separated;
the aforementioned correction station with sorting table (20) for correcting faulty piles.

2. System according to Claim 1 comprising a weighing station (4) downstream of the reading unit (3) for checking the quantity read in a single pile within the scope of conformity criteria.

3. System according to Claim 1 comprising a measuring device (5) downstream of the reading unit (3) for the checking the pile size within the scope of conformity criteria.

4. System according to Claim 1 comprising a camera unit (6) downstream of the reading unit (3) for checking the correct position of folded pieces of laundry in a pile.

5. System according to Claim 1, comprising a bundling device (7) in the form of a strapping machine for bundling fault-free and/or faulty piles.

6. System according to Claim 1 with a bundling device (7) in the form of a film packaging machine for bundling fault-free and/or faulty piles.

7. System according to Claim 1, **characterized in that** the labelling unit (8) generates supplementary pile information which indicates the reason for why piles are faulty.

8. System according to Claim 7, **characterized in that** the reason for the defect is readable as a barcode for the respective identification number.

## Revendications

1. Système, destiné à identifier et à contrôler des pièces de linge pour une blanchisserie, à l'aide de transpondeurs apposés sur les pièces de linge dans un procédé de travail en plusieurs étapes, en partant d'un point de distribution (1) d'un dispositif de convoyage (2) jusqu'à son poste de déchargement, pour la gestion de commandes de pièces de linge regroupées en piles selon des critères de conformité, dans une unité de contrôle consécutive, faisant partie du système, des pièces de linge regroupées à tort étant identifiées comme étant des piles défectueuses et amenées vers un poste de tri (9) pour y être séparées de piles finies identifiées comme étant correctes et après le passage d'un poste de correction, étant à nouveau amenées vers le point de distribution (1) pour la gestion de commandes en tant que pile finie, à partir d'un stock de produits qui fait partie du système, des pièces de linge nouvelles ou traitées par préparation de linge sale étant regroupées en étant chacune marquée après l'attribution d'un numéro d'identification RFID à l'aide d'une unité de commande (12) électronique pourvue d'une base de données centralisée, qui fait partie du système selon des critères de conformité lisibles dans celle-ci et étant regroupées par les modules consécutifs suivants qui font partie du système en des piles pour la gestion de commandes finies :
ledit dispositif de convoyage (2) pourvu dudit point de distribution (1) pour des pièces de linge empilées selon des critères de conformité ;
une unité de lecture (3), destinée à lire les balises RFID (31) de toutes les pièces de linge (30) d'une pile (13) et d'autres données sauvegardées dans la base de données concernant le numéro d'identification d'une balise RFID et à compter le nombre de pièces de linge d'une pile ;
un dispositif de regroupement (7), destiné à regrouper des piles finies, aptes à la gestion des commandes ;
une étiqueteuse (8), destinée à afficher de manière visuellement lisible par un étiquetage correspondant aussi bien des piles conformes que défectueuses ;
ledit poste de tri (9), pourvu d'une pluralité de positions de tri (10a, 10b), dont l'une pour des piles défectueuses qui doivent être séparées ;
ledit poste de correction pourvu d'une table de tri (20), destiné à corriger des piles défectueuses.

2. Système selon la revendication 1, pourvu d'un poste de pesage (4), placé en aval de l'unité de lecture (3), destiné à vérifier le nombre de pièces d'une pile dans le cadre des critères de conformité.

3. Système selon la revendication 1, pourvu d'un dispositif de mesure (5), placé en aval de l'unité de lecture (3), destiné à vérifier la taille des piles dans le cadre des critères de conformité.

4. Système selon la revendication 1, pourvu d'une unité de caméra (6) , placée en aval de l'unité de lecture (3), destinée à vérifier la position exacte de pièces de linge pliées d'une pile.

5. Système selon la revendication 1, pourvu d'un dispositif de regroupement (7) sous la forme d'une machine de cerclage, destinée à regrouper des piles correctes et / ou défectueuses.

6. Système selon la revendication 1, pourvu d'un dispositif de regroupement (7) sous la forme d'une machine d'emballage sous film, destinée à regrouper des piles correctes et / ou défectueuses.

7. Système selon la revendication 1, **caractérisé en ce que** l'étiqueteuse (8) génère des informations complémentaires concernant les piles, lesquelles mentionnent le motif du défaut pour les piles défectueuses.

8. Système selon la revendication 7, **caractérisé en ce que** le motif du défaut est lisible en tant que code-barres pour le numéro d'identification concerné.
